# DEMANDE DE BREVET EUROPEEN

(11) **EP 3 561 575 A1**
(43) Date de publication de la demande: **30.10.2019**
(21) Numéro de dépôt: 19170522.7
(22) Date de dépôt: 23.04.2019
(51) Int. Cl.: G02C 5/14, G02C 5/22

(54) **CHARNIÈRE SANS VIS DE PIVOT POUR MONTURE DE LUNETTES**

(30) Priorité: 23.04.2018 FR 1853546
(71) Demandeur: Kuntz, Christophe, 75011 Paris (FR)
(72) Inventeur: Kuntz, Christophe, 75011 Paris (FR)
(74) Mandataire: Casalonga

(57) **Abrégé**

Cette charnière (16) sans vis de pivot pour monture de lunettes comprend un élément de charnière (1), en forme de bande, destiné à être monté sur une branche d'une monture de lunette et sur une face de la monture de lunette de façon à être inséré dans un orifice de la branche (15) et dans des orifices de la face (14) de manière à verrouiller l'ensemble dans une première position dans laquelle la branche de la monture est en position ouverte permettant le port des lunettes et une seconde position dans laquelle la branche est escamotée en position fermée contre la face de la monture.

## Description

La présente invention concerne les montures pour lunettes, et plus particulièrement une charnière sans vis pour la fabrication des montures de lunettes et le montage des branches de lunettes sur la monture.

Une paire de lunettes comporte une monture sur laquelle sont montés des verres. La monture est une armature comprenant une extérieure et une face intérieure, désignée généralement par le terme de face de la monture, et deux branches. La face de la monture permet de recevoir et de maintenir les verres, tandis que les branches, posées sur les oreilles, assurent la stabilité des lunettes.

Chacune des deux branches est assemblée à l'une des deux extrémités de la face à l'aide d'une charnière. La charnière permet, d'une part, de replier la branche contre la face pour réduire l'encombrement de la paire de lunettes avant de la ranger dans un boîtier, et d'autre part, de déplier la branche dans une position dans laquelle la branche peut être posée sur une oreille d'un utilisateur.

Il existe de très nombreux types de charnière utile pour assembler les branches d'une monture à la face. Le plus souvent, l'assemblage est réalisé à l'aide d'une charnière à vis formant pivot, c'est-à-dire une charnière utilisant une vis autour de laquelle la charnière pivote.

Les charnières comportant une vis formant pivot présentent des inconvénients. Lorsque la vis est trop serrée, la charnière est difficile à actionner. Lorsque la vis n'est pas assez serrée, en revanche, la vis peut facilement se détacher.

Par ailleurs, avec une vis de pivot, il n'est pas possible de verrouiller une branche dans une position, que ce soit dans la position dépliée ou dans la position repliée. En effet, en général, le blocage en position dépliée est réalisé mécaniquement par une portion de la branche en butée contre une portion de la face, et le blocage en position repliée est réalisé par la branche en butée contre la face.

Il est connu du document DE 298 06 448 une charnière sans vis comprenant un élément fixé sur la face d'une monture de manière à former un orifice de réception d'une branche de monture, la branche comprenant une extrémité en forme de spirale. L'extrémité en spirale est insérée dans l'orifice de l'élément de la face pour former la charnière.

Une telle charnière ne présente pas une bonne stabilité verticale, en raison du fait que la spirale de la branche n'a qu'un seul point de fixation sur la face.

Il est également connu du document EP 1 754 097 une charnière sans vis de pivot comprenant un premier élément ayant une extrémité en forme de spirale, un deuxième élément formant un orifice de passage et une paroi d'appui pour l'extrémité en spirale du première élément, et un troisième élément permettant de verrouiller le second élément, qui est formé par un assemblage de deux parties distinctes, et de former une rainure de réception de l'extrémité en spirale du premier élément.

La charnière sans vis décrite dans ce document ne présente qu'un point de fixation entre le premier élément et le second élément, le premier élément ne traversant le deuxième élément qu'à un seul endroit. Par conséquent, la branche ne présente pas un très bon verrouillage vertical de la branche par rapport à la face de la monture sans le troisième élément.

Il est également connu du document EP 0 863 424 une branche de monture de lunettes comportant une charnière sans vis, la charnière comprend deux fentes ouvertes à une de leurs extrémités permettant de définir trois bandes métalliques possédant chacune une extrémité libre, la bande comprise entre les deux bandes périphériques s'écartent du plan comprenant les deux bandes périphériques lorsque la branche est repliée.

L'invention a pour objectif de fournir une charnière améliorée sans vis de pivot, utilisable pour assembler une branche à une face d'une monture d'une paire de lunettes et permettant de présenter un bon verrouillage vertical tout en utilisant qu'un élément.

L'invention a ainsi pour objet une charnière sans vis de pivot pour monture de lunettes comprenant un élément de charnière destiné à être monté sur une branche d'une monture de lunette et sur la face de ladite monture, formant ainsi une charnière articulée apte à permettre l'articulation de la branche de la monture entre une première position dans laquelle la branche de la monture est en position ouverte permettant le port des lunettes et une seconde position dans laquelle la branche est escamotée en position fermée contre la face de la monture.

Selon une caractéristique générale de l'invention, l'élément de charnière comprend deux extrémités mutuellement opposées l'une en forme de crochet et l'autre en forme de boucle de manière que l'ensemble de l'élément forme une pince.

Passant dans la branche par un orifice, l'élément de charnière permet la jonction avec la face de la monture en étant ensuite clippé dans deux orifices de la face, permettant le maintien de l'ensemble.

Assemblé avec la branche et la face de la monture, l'élément de charnière permet d'assurer un bon verrouillage et un pivot de la branche entre la première position et la seconde position, sans que l'élément ne pivote.

De préférence, l'élément de charnière comprend une bande recourbée de manière à délimiter une ouverture d'insertion pour y passer la branche.

La bande recourbée comprend préférentiellement deux extrémités elles même recourbées, destinées à être montées sur la face de la monture.

La première extrémité est recourbée en forme de L comme un crochet, qui permet le passage de l'élément par l'orifice de la branche et la fixation de l'élément dans le premier orifice de la face de la monture.

La seconde extrémité possède une forme de spirale destinée à être insérée dans la face avant de la monture par le deuxième orifice, permettant grâce au deuxième point de fixation, le verrouillage de l'élément et le maintien de l'ensemble pour permettre à la branche de pivoter sans que l'élément ne pivote. Ainsi, l'ensemble forme une charnière.

De préférence, les deux extrémités recourbés de l'élément sont configurées pour fournir un effet ressort de la charnière et du pivot de la branche, c'est à dire former un ressort interne à la charnière, lorsque la branche est dans une position intermédiaire entre la première position et la seconde position de manière à ramener la branche dans la première position ou la seconde position.

L'effet ressort fourni par la charnière permet ainsi de faciliter le changement de position des branches de la monture utilisant lesdites charnières.

L'effet ressort permet également de s'assurer que la branche ne soit pas bloquée que dans la première ou la seconde position.

Dans un mode de réalisation de l'invention, l'élément de charnière comprend deux extrémités, suffisamment espacées pour être insérées par l'orifice de la branche et les orifices de la face de la monture.

Une configuration possible de la charnière pour fournir l'effet ressort consiste à dimensionner l'élément en forme de U pour que la distance entre les bras parallèles du U soit égale à la longueur de la distance entre la tête de la branche et le début de l'orifice de la branche et que l'espaces situé entre la parallèle extérieure et la base du U face aux côtés respectifs de la monture soit égal à l'épaisseur de la partie supérieur de la branche. Ainsi, la branche peut pivoter pour buter sur la face de la monture en première position et en deuxième position.

Les parallèles de l'élément comme la base peuvent avantageusement être dimensionnés en fonction des mesures esthétiques de la branche et de la face pour permettre le verrouillage dans la première position ou dans la seconde position.

Les dimensions longitudinales ainsi que leurs écartements définissent ainsi la première position et la seconde position, tout en assurant le verrouillage dans la première position ou dans la seconde position, la charnière ne pouvant pivoter qu'entre les deux positions et uniquement sur une plage angulaire donnée.

L'élément peut être réalisé en un matériau métallique.

Le matériau métallique utilisé peut être de l'inox ou du titane. Le métal présente une résistance importante pour une épaisseur réduite, et un poids relativement réduit.

D'autre avantages et caractéristiques de l'invention apparaîtront à l'examen de la description détaillée d'un mode de réalisation de l'invention, nullement limitatif, et des dessins annexés, sur lesquels :
La figure 1 illustre une vue en perspective d'un élément de charnière selon un mode de réalisation de l'invention.
La figure 2 illustre une vue en perspective selon un mode de réalisation de l'élément de charnière, d'une face de monture et d'une branche de monture avant assemblage.
La figure 3 illustre une vue en perspective selon un mode de réalisation de l'élément de charnière, d'une face de monture et d'une branche de monture assemblés formant la charnière dans la première position.
La figure 4 illustre l'élément, la face de monture et la branche de monture dans la seconde position.

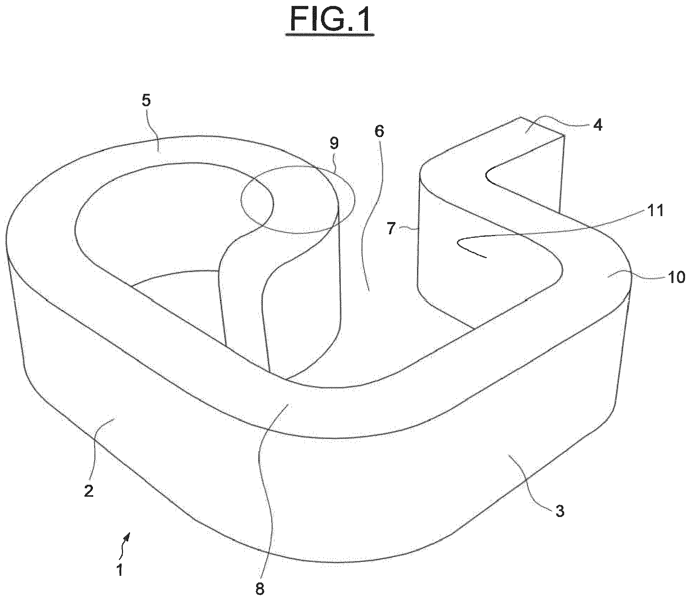

Sur la figure 1 est illustrée une vue en perspective d'un l'élément 1 de charnière selon un mode de réalisation de l'invention.

Cet élément de charnière est destiné à permettre l'assemblage d'une branche de lunettes sur une monture.

Il est formé à partir d'un élément en forme en U ayant deux bras 2 et 11 et une base 3 plate, et comprenant une bande de section transversale parallélépipédique et d'épaisseur constante sur toute sa longueur.

Le premier bras 2 de l'élément 1 comprend une extrémité libre 5 recourbée en spirale vers l'intérieur, dans le plan de l'élément, tandis que l'autre bras 11 comprend une extrémité 4 droite en forme de crochet s'étendant parallèlement à la base et tournée vers l'extérieur de l'élément de charnière.

La seconde extrémité 4 est reliée à la première extrémité 5 par les portions 2, 3, et 11.

Le bras 2, situé dans le prolongement de la première extrémité 5 est parallèle au bras 11, situé dans le prolongement de la seconde extrémité 4 en forme de crochet via une portion courbe 7.

La seconde extrémité 4 est perpendiculaire au bras 11, formant ainsi un crochet.

Le bras 2 est relié au bras 11 par la base 3 qui est perpendiculaire aux bras 2 et 3 et est reliée à ces derniers via des portions courbes 8 et 10 formant un U dont la base est plate.

Comme on le voit sur la figure 1, la portion 9 en spirale de la première extrémité 5 est en regard de la portion courbé 7, de manière à définir un passage 6.

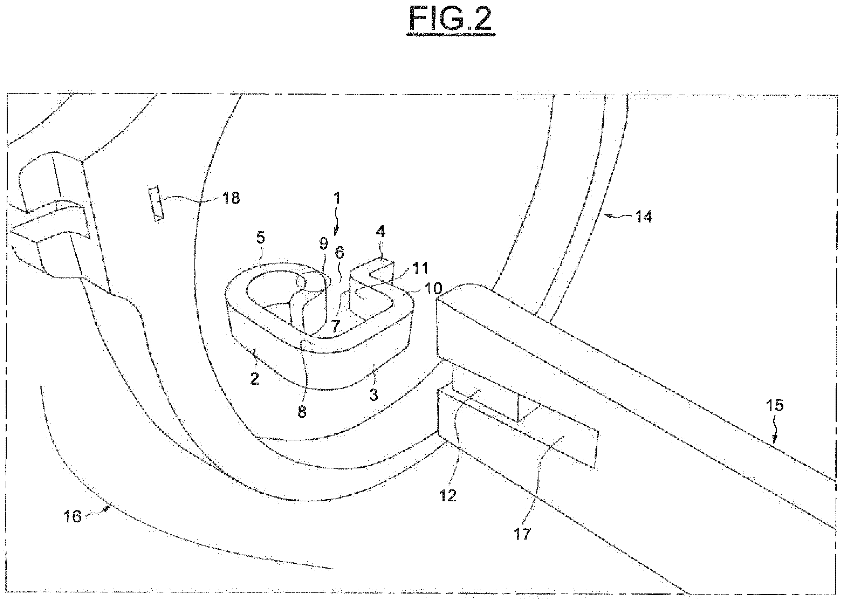

Sur la figure 2 est illustrée une vue en perspective d'une charnière 16 réalisée à partir de l'élément de charnière de la figure 1, avant assemblage avec la face 14 et la branche 15 d'une monture de lunette.

La branche 15 de monture de lunette comprend un orifice 17 transversal pratiqué au voisinage de l'extrémité de la branche destinée à être articulé sur la monture. Cet orifice se prolonge par une gorge longitudinale pratiquée dans la face externe de la branche et qui débouche à l'extrémité de la branche. Cette gorge délimite intérieurement une butée 12.

L'orifice 17 est destiné à recevoir l'extrémité droite 4 de l'élément de charnière et la gorge est destinée à recevoir le bras 2.

Cette configuration permet ainsi à l'élément 1 d'être monté par le passage de la seconde extrémité 4 de l'élément 1 dans l'orifice 17 et par l'insertion de la butée 12 de la branche 15 dans passage en 6.

La face 14 de la monture de lunette comprend quant à elle un premier orifice 18 et un second orifice 13.

L'orifice 18 de la face 14 est configuré de manière à recevoir la seconde extrémité 4 de l'élément 1 après passage dans l'orifice 17 et l'orifice 13 de la face 14 est configuré de manière à recevoir la première extrémité 5 de l'élément 1.

Les orifices 18 et 13 de la face 14 sont dimensionnés pour permettre un bon maintien et la stabilité de l'élément 1 et de la charnière 16.

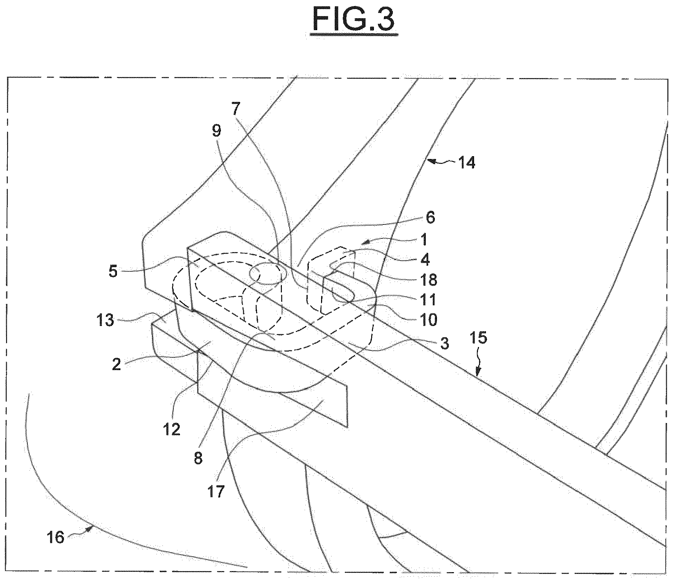

Sur la figure 3 est illustré l'assemblage de l'élément 1 avec la face de monture de lunette 14 et la branche de monture de lunette 15 formant ainsi la charnière 16.

La figure 3 illustre la monture de lunette dans sa première position ouverte, permettant de positionner la monture sur un visage.

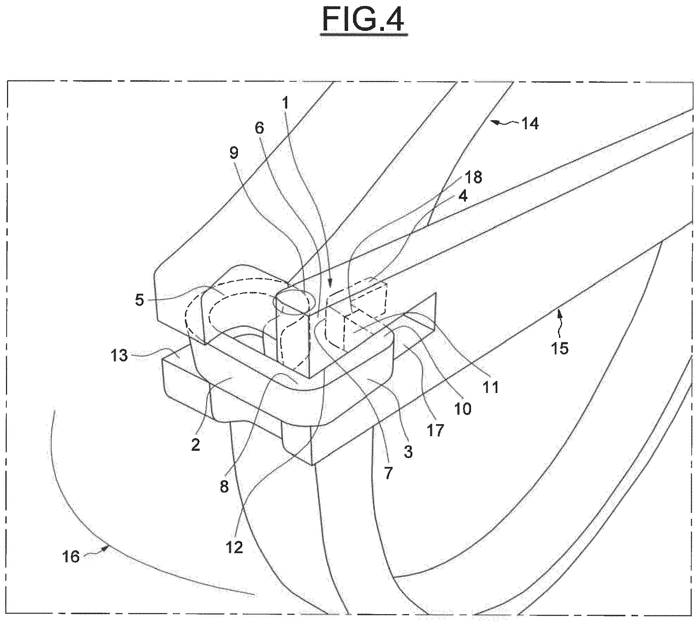

Sur la figure 4 est illustré l'assemblage de l'élément 1 avec la face de monture de lunette 14 et la branche de monture de lunette 15 formant ainsi la charnière 16.

La figure 4 illustre la monture de lunette dans sa seconde position fermée, permettant de ranger la monture dans une boîte comme un étui protecteur.

Le passage de la première position à la seconde position s'effectue par une rotation possible de la branche 15 vers l'intérieur par rapport à la face 14 et, si l'on souhaite passer de la seconde position à la première position la rotation possible de la branche 15 s'effectue vers l'extérieur par rapport à la face 14.

L'élément 1 permet à la branche 15 de buter contre la face 14 de la monture de lunette en première position comme dans la seconde position permettant la rotation tout en maintenant l'ensemble de la charnière 16.

La butée en première position obtenue entre la face 14 et la branche 15 est formée et maintenue par le bras 2 et la base 3 de l'élément 1 et perpendiculaires l'un par rapport à l'autre, formant un espace limité de maintien avec la face 14, verrouillant la portion 12 de la branche 15 en butée de la face 14.

La butée en seconde position obtenue entre la face 14 et la branche 15 est formée et maintenue par les bras 2 et 11 et la base 3 de l'élément 1 formant un espace limité de maintien avec la face 14, verrouillant la portion 12 de la branche 15 en butée contre la face 14.

Comme cela apparaît sur les figures 3 et 4, l'élément 1 reste fixé sur la face de l'orifice 13 donnant une plage angulaire restreinte dans un espace limité, entre la première position et la seconde positions, constituant des moyens de verrouillage d'une monture de lunette.

En outre, les longueurs et l'espace limité par les bras 2, 11 et la base 3 sont dimensionnées de manière à fournir un effet ressort à la charnière 16 lorsqu'elle est dans une position entre la première position et la seconde position tout en fournissant un bon verrouillage de la branche 15 contre la face 14 dans la première position et la seconde position.

Dans le mode de réalisation de la charnière 16, les dimensions de l'élément 1 dépendent des dimensions choisies pour les orifices 13 et 18 de la face 14 et de l'orifice 17 et la butée 12 de la branche 15 et des dimensions esthétiques choisies pour la branche 15 et la face 14 .

En outre, l'épaisseur variable de la partie supérieur de la branche 15 et la distance entre les orifices de la face 14 et la longueur de la butée 12 de la branche 15, déterminent les proportions des diverses parties de l'élément 1 pour obtenir un bon verrouillage en butée dans la première position et dans la seconde position de la monture de lunette et ainsi permettre l'effet ressort désiré.

L'invention fournit ainsi une charnière 16 améliorée sans vis de pivot utilisable pour assembler une branche 15 à la face 14 d'une monture de lunette avec un seul élément permettant, d'une part, d'empêcher tout déplacement vertical, c'est à dire selon l'axe horizontale de l'élément 1, et d'autre part, de bloquer la branche dans une première et seconde position uniquement grâce à la l'élément 1 de sorte que le pivot de la branche 15 n'aille pas au-delà de ces deux positions et sans que l'élément 1 ne pivote.

Comme indiqué précédemment, l'invention concerne ainsi une charnière sans vis de pivot pour monture de lunettes comprenant un élément de charnière, en forme de bande, destiné à être monté sur une branche d'une monture de lunette et sur une face de la monture de lunette de façon à être inséré dans un orifice de la branche et dans des orifices de la face de manière à verrouiller l'ensemble dans une première position dans laquelle la branche de la monture est en position ouverte permettant le port des lunettes et une seconde position dans laquelle la branche est escamotée en position fermée contre la face de la monture.

Cette charnière peut également présenter une ou plusieurs des caractéristiques suivantes prises isolément ou selon toutes les combinaisons techniquement possibles :
- l'élément en forme de bande est recourbé en forme de U dont la base est plate et dont les extrémités sont recourbées et sont destinées à être insérées dans lesdits orifices de la branche et de la face de monture, respectivement, les extrémités délimitant entre elles un espace d'ouverture permettant l'assemblage de la monture de lunette ;
- les extrémités sont recourbées l'une en forme de crochet et l'autre en forme de spirale et sont configurés pour fournir un verrouillage de la face avec la branche dans la position ouverte et dans la position fermée ;
- l'élément courbé est apte à permettre de verrouiller la face avec la branche et de limiter les rotations de la branche de monture de lunette dans l'axe horizontal de l'élément sans que celui-ci ne pivote ;
- l'élément est apte à permettre un verrouillage de la monture en position ouverte et fermée, et un mouvement de ressort de la branche dans une position intermédiaire entre la position ouverte et la position fermée ;
- l'élément est apte à permettre un mouvement de ressort dans la position intermédiaire entre la position fermée et la position ouverte de la branche par la pression exercée par la branche sur un bras de l'élément dans ladite position intermédiaire ;
- l'élément recourbé comporte deux extrémités recourbés respectivement en spirale et en crochet aptes à permettre un maintien de la monture par une pression de pince exercée dans la branche et la face en position fermée et ouverte ;
- l'élément recourbé est amovible ;
- laquelle l'élément est composé d'un seul matériau métallique.

L'invention a également pour objet une monture pour une paire de lunettes comprenant au moins une charnière sans vis de pivot telle que définie ci-dessus.

## Revendications

1. Charnière (16) sans vis de pivot pour monture de lunettes comprenant un élément de charnière (1), en forme de bande, destiné à être monté sur une branche d'une monture de lunette et sur une face de la monture de lunette de façon à être inséré dans un orifice de la branche (15) et dans des orifices de la face (14) de manière à verrouiller l'ensemble dans une première position dans laquelle la branche de la monture est en position ouverte permettant le port des lunettes et une seconde position dans laquelle la branche est escamotée en position fermée contre la face de la monture, **caractérisé en ce que** l'élément (1) est apte à permettre le verrouillage de la monture en position ouverte et fermée, et un mouvement de ressort de la branche (15) dans une position intermédiaire entre la position ouverte et la position fermée.

2. Charnière (16) selon la revendication 1, dans laquelle l'élément (1) en forme de bande est recourbé en forme de U dont la base est plate et dont les extrémités sont recourbées et sont destinées à être insérées dans lesdits orifices de la branche et de la face de monture, respectivement, les extrémités délimitant entre elles un espace d'ouverture (6) permettant l'assemblage de la monture de lunette.

3. Charnière (16) selon la revendication 2, dans laquelle les extrémités sont recourbées l'une (4) en forme de crochet et l'autre (5) en forme de spirale et sont configurés pour fournir un verrouillage de la face (14) avec la branche (15) dans la position ouverte et dans la position fermée.

4. Charnière (16) selon l'une des revendications 2 et 3, dans laquelle l'élément courbé est apte à permettre de verrouiller la face (14) avec la branche (15) et de limiter les rotations de la branche (15) de monture de lunette dans l'axe horizontal de l'élément (1) sans que celui-ci ne pivote.

5. Charnière (16) selon l'une quelconque des revendications précédentes, dans laquelle l'élément (1) est apte à permettre un mouvement de ressort dans la position intermédiaire entre la position fermée et la position ouverte de la branche (15) par la pression exercée par la branche (15) sur un bras (2) de l'élément (15) dans ladite position intermédiaire.

6. Charnière (16) selon l'une quelconque des revendications 1 à 5, dans laquelle l'élément (1) recourbé comporte deux extrémités recourbées respectivement en spirale et en crochet aptes à permettre un maintien de la monture par une pression de pince exercée dans la branche (15) et la face (14) en position fermée et ouverte.

7. Charnière (16) selon l'une quelconque des revendications 1 à 6, dans laquelle l'élément (1) recourbé est amovible.

8. Charnière (16) selon l'une quelconque des revendications 1 à 7, dans laquelle l'élément (1) est composé d'un seul matériau métallique.

9. Monture pour une paire de lunettes comprenant au moins une charnière (16) sans vis de pivot selon l'une quelconque des revendications 1 à 8.
